# EUROPÄISCHE PATENTSCHRIFT

(11) **EP 1 953 403 B1**
(45) Veröffentlichungstag und Bekanntmachung des Hinweises auf die Patenterteilung: **26.10.2011**
(21) Anmeldenummer: 07101701.6
(22) Anmeldetag: 05.02.2007
(51) Int. Cl.: F16D 3/06

(54) **Kupplungsvorrichtung mit Federeinrichtung und Segment**
Coupling device with a spring device and segment
Dispositif d'embrayage doté d'un dispositif à ressort et d'un segment

(43) Veröffentlichungstag der Anmeldung: 06.08.2008
(73) Patentinhaber: Getrag Ford Transmissions GmbH, 50735 Köln (DE)
(72) Erfinder: Hegerath, Andreas, 50126 Bergheim (DE); Eggert, Ulrich, 41751 Viersen (DE); Loerken, Markus, 42399 Wuppertal (DE)

(56) Entgegenhaltungen:
- GB-A- 1 545 416
- US-A- 792 964
- US-A- 3 359 819
- US-A- 4 473 317

## Beschreibung

Die Erfindung betrifft eine Kupplungsvorrichtung mit einem ersten Kupplungsteil und mit einem zweiten Kupplungsteil, der zum ersten Kupplungsteil koaxial angeordnet ist, wobei zur formschlüssigen Übertragung eines Drehmomentes zwischen den Kupplungsteilen das erste Kupplungsteil wenigstens ein erstes Eingriffsglied und das zweite Kupplungsteil wenigstens ein zweites Eingriffsglied aufweisen, und wobei die Kupplungsvorrichtung eine Federeinrichtung umfasst, durch die das erste Eingriffsglied und das zweite Eingriffsglied in Umfangsrichtung verspannt sind.

Eine derartige Kupplungsvorrichtung wird beispielsweise in einem Kraftfahrzeug eingesetzt, um einen Verbrennungsmotor mit einem Getriebe des Kraftfahrzeugs zu verbinden. Üblicherweise weisen die Kupplungsteile eine Vielzahl von Eingriffsgliedern beispielsweise in Form von Klauen bei einer Klauenkupplung oder in Form von Zähnen bei einer Keilwellenverbindung auf. Durch die Federeinrichtung, die die Kupplungsteile in Umfangsrichtung verspannt, sollen unerwünschte Geräusche vermieden werden, die bei Schwingungsanregungen durch den Verbrennungsmotor in der Kupplungsvorrichtung entstehen können (zum Beispiel das Klackern der Zähne durch Hin- und Herbewegung innerhalb des Zahnspiels).

Beispielsweise ist aus der DE 196 23 287 A1 eine Kupplung offenbart, bei der das erste Eingriffsglied in Form eines Zackens einen Einschnitt aufweist, der diesen Zacken in einem Zackenteil, der einen starren Körper bildet, und mindestens einen Zackenteil trennt, der vorbestimmte elastisch Eigenschaften hat. Diese Zacke greift in eine komplementär ausgebildete Vertiefung, die das zweite Eingriffsglied des zweiten Kupplungsteils bildet, wobei durch das elastische Zackenteil Zacke und Vertiefung in Umfangsrichtung verspannt sind. Eine derartige Lösung lässt sich aufgrund begrenzten Bauraums als Verbindung zwischen Motor und Getriebe in einem Kraftfahrzeug bei einem gewissen zu übertragenden Drehmoment und hinsichtlich einer einfachen Montage nicht einsetzen.

Aus der DE 44 07 169 A1 ist eine Kupplungsvorrichtung bekannt, wobei das erste Kupplungsteil als eine Nabe mit Innenverzahnung ausgeführt ist. Das zweite Kupplungsteil weist eine zur Innenverzahnung korrespondierende Außenverzahnung auf. In die Nabe sind zwei diametral gegenüberliegende radiale Schlitze mit radial verlaufenden Seitenflächen eingebracht. In die Schlitze ist jeweils ein Segment in Form eines Gleitsteins eingesetzt, wobei dessen Beweglichkeit in Umfangsrichtung durch die Seitenflächen des entsprechenden Schlitzes begrenzt wird. Der Gleitstein ist an seinem radial inneren Ende mit einer inneren axialen Mitnahmeverzahnung versehen, welche der Außenverzahnung eines zweiten Kupplungsteils angepasst ist. An einer äußeren Umfangsfläche weist der Gleitstein eine Umfangsnut für den Eingriff eines geschlitzten ringförmigen Biege-Formfederelements auf, welches in einem Leerlaufbetrieb der Kupplungsvorrichtung die Gleitsteine radial nach innen gegen die Außenverzahnung des zweiten Kupplungsteils drückt und somit die Kupplungsteile in Umfangsrichtung untereinander verspannt. In anderen Last- oder Drehzahlbereichen hingegen werden die Gleitsteine radial nach außen gedrückt, sodass sie sich nicht mehr an der Außenverzahnung des zweiten Kupplungsteils abstützen.

In der US 4 473 317 A ist eine Vorrichtung offenbart, die das Flankenspiel einer Profilwellenverbindung (beispielsweise einer Zahnwellen- oder Keilwellenverbindung), aufhebt. Dazu ist eine Profilwelle mit einer Außenverzahnung zweiteilig ausgeführt, wobei beide Teile durch eine axial angeordnete Schraube miteinander verbunden sind. Die Verbindung steht durch ein axial wirkendes Federelement unter Spannung. Durch eine Rampe zwischen den beiden Teilen wird die Spannung in axialer Richtung in eine Verspannung zwischen den beiden Teilen in Umfangsrichtung umgewandelt. Durch diese Verspannung lässt sich ein Flankenspiel zwischen der Profilwelle und einer mit einem entsprechenden Gegenprofil ausgeführten Nabe mit einer Innenverzahnung, vermeiden. Die Vorrichtung gemäß US 4 473 317 A benötigt vergleichsweise viel axialen Bauraum.

Die US 792,964 offenbart ein Getriebe mit einer Welle und einer auf der Welle festsitzenden Verzahnung, die eine Lücke aufweist. In der Lücke ist ein Segment mit zwei Zähnen angeordnet, das drehbar um die Welle gelagert ist. Über einen federbelasteten Keil wirkt zwischen Verzahnung und Segment eine Kraft, die das Segment bezogen auf die Verzahnung in eine Umfangsrichtung drückt, um ein mögliches Zahnspiel im Getriebe zu kompensieren. Das Getriebe ist in einem bevorzugten Ausführungsbeispiel als Lenkgetriebe ausgebildet, wobei die Verzahnung mit einer Lenkschneckenwelle in Eingriff steht.

Der Erfindung liegt die Aufgabe zugrunde, eine Kupplungsvorrichtung mit Federeinrichtung, die insbesondere in einem Kraftfahrzeug zur Verbindung von Motor und Getriebe einsetzbar ist, bereitzustellen, die in einem beschränkten Bauraum untergebracht werden kann, eine Geräuschentwicklung der Kupplungsvorrichtung durch Schwingungen des Motors in unterschiedlichen Drehzahl- oder Lastbereichen möglichst vermeidet, einfach aufgebaut und leicht zu montieren ist.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Gemäß Anspruch 1 wird eine Kupplungsvorrichtung vorgeschlagen, bei der das Segment wenigstens einen radial nach außen gerichteten Segmentzahn aufweist, der in die Innenverzahnung des ersten Kupplungsteils greift. Die Federeinrichtung stützt sich in Umfangsrichtung einerseits an dem zweiten Kupplungsteil und andererseits an dem Segment ab, das sich wiederum an der Innenverzahnung des ersten Kupplungsteils abstützt. Dadurch sind Innenverzahnung und Außenverzahnung in Umfangsrichtung durch die Kraft der Federeinrichtung verspannt. Mit anderen Worten: Die Federeinrichtung drückt das Segment gegen die Innenverzahnung, sodass die Innenverzahnung bezogen auf die Außenverzahnung verdreht wird, bis die einzelnen Zähne der Innenverzahnung an den einzelnen Zähnen der Außenverzahnung anliegen. Somit können - verursacht durch Drehschwingungen des Motors - die einzelnen Zähne der Innen- und Außenverzahnung nicht voneinander abheben und wieder aufeinander stoßen, was zu unerwünschten Geräuschen (Klackern) führt und zudem die Kupplungsvorrichtung schädigt.

Das Segment ist bezogen auf die Außenverzahnung in Umfangsrichtung bewegbar und in axialer und radialer Richtung fixiert gehalten. Ein Spiel in Umfangsrichtung ist notwendig, damit die über das Segment auf die Innenverzahnung übertragene Kraft zu einer Verspannung zwischen Außenverzahnung und Innenverzahnung führt. Das Segment ist zweckmäßig bezogen auf Außenverzahnung und Innenverzahnung so anzuordnen, dass es sich nur in gespannter Lage gemeinsam mit der Außenverzahnung axial in die Innenverzahnung schieben lässt. Das Segment kann mehrere Segmentzähne aufweisen, beispielsweise vier.

Die Außenverzahnung weist eine Lücke auf, in der das Segment angeordnet ist. Die Lücke weist dabei vorzugsweise zwei parallele und zueinander beabstandete Stege auf, die das Segment in axialer Richtung in Position halten.

Um eine Montage der Außenverzahnung gemeinsam mit dem Segment in die Innenverzahnung zu vereinfachen, können der Segmentzahn bzw. die Segmentzähne des Segments angefast sein. Beim Aufschieben der Verzahnungen aufeinander wird aufgrund der angefasten Segmentzähne das Segment entgegen der Kraft der Federeinrichtung leicht in Umfangsrichtung verrückt, so dass sowohl die Segmentzähne als auch die Zähne der Außenverzahnung in die Innenverzahnung eingreifen können. Das verspannte Segment führt dann zu der gewünschten Verspannung zwischen Innenverzahnung und Außenverzahnung.

In einem bevorzugten Ausführungsbeispiel ist das Segment von außen in die Lücke der Außenverzahnung einsetzbar, wobei die Schenkelfeder ein Lösen des Segments aus der Lücke verhindert oder diesem Lösen entgegenwirkt. Das Segment kann schwenkbar um eine Drehachse an der Außenverzahnung aufliegen, wobei in Einsatzlage (in eingesetzter Lage) die Schenkelfeder ein Haltemoment auf das Segment ausübt, wenn dieses aus der Einsatzlage gedreht wird. Insbesondere kann das Segment so ausgebildet sein, dass es in die Einsatzlage eingeclipst wird. Schenkelfeder und Segment bilden somit eine Rastverbindung, die nur durch Aufbringen einer Kraft wieder gelöst werden kann.

In einem bevorzugten Ausführungsbeispiel überträgt im Normalbetrieb das erste Kupplungsteil in Hauptdrehrichtung ein Drehmoment auf das zweite Kupplungsteil, wobei die Federeinrichtung die Innenverzahnung in Hauptdrehrichtung gegen die Außenverzahnung drückt, so dass die einzelnen Zähne der Innenverzahnung mit einer Lastseite an einer Lastseite der einzelnen Zähne der Außenverzahnung anliegen. Durch diese Anordnung wird bei Drehmomentübertragung von dem ersten Kupplungsteil zum zweiten Kupplungsteil in Hauptdrehrichtung die Federeinrichtung nicht belastet. Kommt es hingegen zu einer Umkehr der Drehmomentübertragung, d.h. zu einer Übertragung vom zweiten Kupplungsteil auf das erste Kupplungsteil, werden die im Normalbetrieb an den Lastseiten anliegenden Zähne auseinander gedrückt, wenn das Übertragungs-Drehmoment größer als das durch die Federeinrichtung erzeugte Drehmoment ist. Um ein Abheben der Lastseite des ersten Eingriffsglied von der Lastseite des zweiten Eingriffsglied zu verhindern, ist die Federeinrichtung zweckmäßig so dimensioniert, dass das durch die Federeinrichtung erzeugte Drehmoment größer ist als üblicherweise auftretende Drehmomente bei Drehmomentumkehr.

Alternativ kann auch vorgesehen sein, dass im Normalbetrieb der Kupplungsvorrichtung das zweite Kupplungsteil mit der Außenverzahnung in Hauptdrehrichtung ein Drehmoment auf das erste, mit der Innenverzahnung ausgestattete Kupplungsteil überträgt. Dabei drückt die Federeinrichtung wiederum die Innenverzahnung gegen die Außenverzahnung, jedoch nun entgegen der Hauptdrehrichtung. Auch hier liegen dann die einzelnen Zähne der Innenverzahnung mit der Lastseite an der Lastseite der einzelnen Zähne der Außenverzahnung an, wobei zu bedenken ist, dass die Hauptdrehrichtung in diesem Ausführungsbeispiel nicht der Hauptdrehrichtung des im vorhergehenden Absatzes beschriebenen Ausführungsbeispiels entspricht, sondern zu dieser entgegengesetzt ist.

In einem bevorzugten Ausführungsbeispiel weist die Federeinrichtung eine Schenkelfeder mit einem Ringteil und zwei Schenkeln auf, wobei der Ringteil koaxial oder exzentrisch zu den Kupplungsteilen angeordnet ist und wobei sich die Schenkel in radialer Richtung nach außen erstrecken. Dabei stützen sich ein Schenkel mittelbar oder unmittelbar an dem zweiten Kupplungsteil und der andere Schenkel mittelbar oder unmittelbar an dem Segment ab, so dass durch die Kraft der Schenkelfeder und über das Segment die Zähne der Innenverzahnung gegen die Zähne der Außenverzahnung des zweiten Kupplungsteils gedrückt werden.

Das Ringteil der Schenkelfeder kann einen Ring umfassen, der in Umfangsrichtung nicht geschlossen ist und somit zwei offene Enden aufweist. Jeweils ein Ende des Rings ist dabei mit einem der Schenkel verbunden. Ein Winkelbereich, in dem der Ring geschlossen ist, kann größer als 300 ° sein und beträgt vorzugsweise mehr als 320°. Die mit den Enden verbundenen Schenkel können im wesentlichen zueinander parallel verlaufen. Die Schenkel können gleichlang ausgebildet sein, es ist aber auch möglich, dass ein Schenkel kürzer ausgeführt ist, beispielsweise derjenige Schenkel, der an dem Segment anliegt. Dies kann vorteilhaft bezüglich des begrenzten Platzangebots und/oder bezüglich der Rastverbindung zwischen Schenkelfeder und Segment sein.

Der Querschnitt der Schenkelfeder kann rechteckig sein oder auch eine andere Form (rund, oval, mehreckig, etc.) aufweisen. Vorzugsweise ist die Schenkelfeder einstückig aus Federstahl ausgeführt. Durch eine derartige Schenkelfeder lassen sich Verspannungs-Drehmomente von über 30 Nm und mehr (beispielsweise 50 Nm) realisieren, wobei sich durch die unterzubringende Schenkelfeder der Bauraum der Kupplungsvorrichtung nicht oder nur unwesentlich vergrößert.

Der wenigstens eine Segmentzahn kann gegenüber der Außenverzahnung in axialer Richtung zurückversetzt sein. Dadurch lässt sich bei der Montage der Kupplungsvorrichtung die Außenverzahnung mit der Innenverzahnung in Eingriff bringen, ohne dass dabei das Segment gegen die Kraft der Federeinrichtung in Umfangsrichtung verschoben werden muss. Dies erleichtert die Montage, da vor Überwindung der Kraft der Federeinrichtung die Außenverzahnung bereits durch die Innenverzahnung geführt bzw. gehalten wird.

Das zweite Kupplungsteil stellt somit ein Kupplungsteil mit einer Außenverzahnung, die in Umfangsrichtung eine Lücke aufweist, in der ein Segment mit wenigstens einem nach außen gerichteten Segmentzahn eingesetzt ist, und mit einer Federeinrichtung dar, durch die in Umfangsrichtung eine Federkraft zwischen Außenverzahnung und Segment erzeugbar ist, wobei beim Einsetzen des Kupplungsteils in eine zu der Außenverzahnung komplementäre Innenverzahnung aufgrund des Eingriffs des Segmentzahns in die Innenverzahnung das Segment gegen die Federkraft der Federeinrichtung in Umfangsrichtung verschoben wird, und wobei das Segment vom Kupplungsteil in axialer Richtung fixiert gehalten ist. Das Kupplungsteil kann. Merkmale aufweisen, wie sie in den Kennzeichen der Ansprüche 2 bis 4 und Ansprüche 6 bis 8 beschrieben werden. Dabei sind auch Kombinationen der Merkmale der Kennzeichen der Ansprüche 2 bis 4 und 6 bis 8 möglich. Beispielsweise kann die Federeinrichtung eine Schenkelfeder aufweisen, wobei sich ein Schenkel der Feder mittelbar oder unmittelbar an der Außenverzahnung und ein anderer Schenkel der Feder an dem Segment abstützt. Auch kann das Segment radial von außen in die Lücke einsetzbar sein, wobei durch das Zusammenwirken von Schenkelfeder und Unterseite des Segments eine Rast- oder Clipsverbindung entsteht, durch die das Segment in der Lücke gehalten wird. Zum Erleichtern der Montage in die Innenverzahnung kann der wenigstens eine Segmentzahn angefasst sein, sodass allein durch das axiale Einsetzen des Kupplungsteils in die Innenverzahnung sich das Segment in Umfangsrichtung gegen die Federkraft der Federeinrichtung verschiebt und somit für eine Verspannung zwischen Kupplungsteil und Innenverzahnung sorgt.

Anhand der in der Zeichnung beschriebenen Ausführungsbeispiele wird die Erfindung näher beschrieben. Es zeigen:
- Figur 1: in schematischer Weise eine Drehmoment-Übertragungskette zwischen einem Verbrennungsmotor und einem Getriebe;
- Figur 2: in perspektivischer Ansicht ein Kupplungsteil mit Außenverzahnung;
- Figur 3: das Kupplungsteil der Figur 2 in der Seitenansicht;
- Figur 4: das Kupplungsteil der Figur 2 im Schnitt; und
- Figur 5: einen Ausschnitt des Kupplungsteils der Figuren 2 bis 4 mit einem Segment in geänderter Stellung.

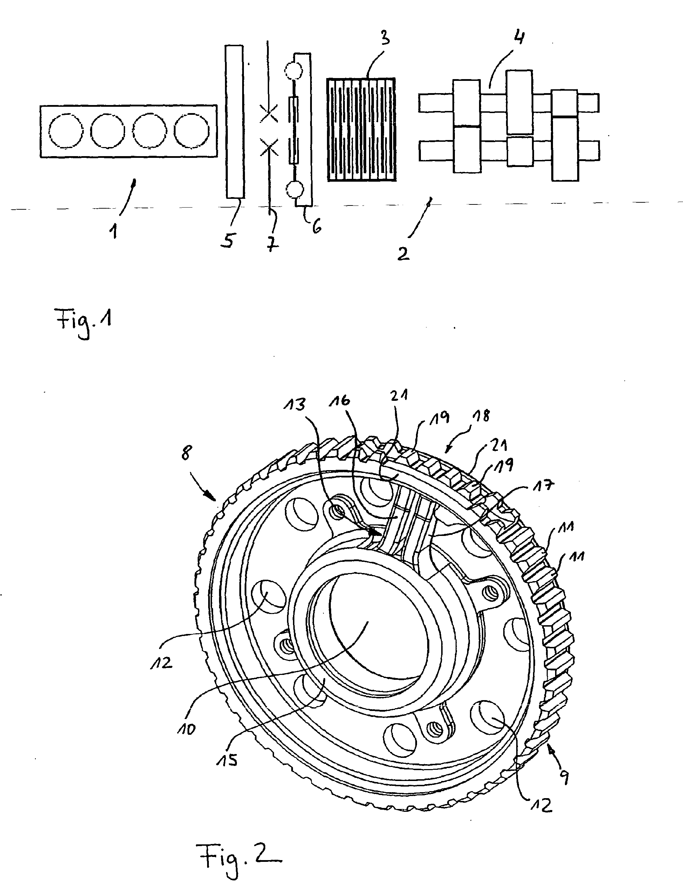

Figur 1 zeigt in schematischer Weise einen Verbrennungsmotor 1 und ein Doppelkupplungsgetriebe 2 eines Kraftfahrzeugs. Das Doppelkupplungsgetriebe 2 besteht aus einer Doppelkupplung 3 und einem Zahnradsatz 4. Ein Schwungrad 5 ist mit einer Kurbelwelle (nicht dargestellt) des Verbrennungsmotors 1 fest verschraubt. Zwischen der Doppelkupplung 3 und dem Schwungrad 5 ist ein Torsionsdämpfer oder Schwingungsdämpfer 6 angeordnet, der über eine formschlüssige Kupplungsvorrichtung 7 drehfest mit dem Schwungrad 5 verbunden ist. Die Kupplungsvorrichtung 7 kann beispielsweise als Keilwellenverbindung mit Innenverzahnung und Außenverzahnung ausgebildet sein. Die Keilwellenverbindung erlaubt eine axiale Relativbewegung der Kurbelwelle bzw. des Schwungrads 5 bezogen auf den Schwingungsdämpfer 6 oder auf die Doppelkupplung 3, so dass mögliche Axialbewegungen der Kurbelwelle nicht auf das Getriebe 2 übertragen werden.

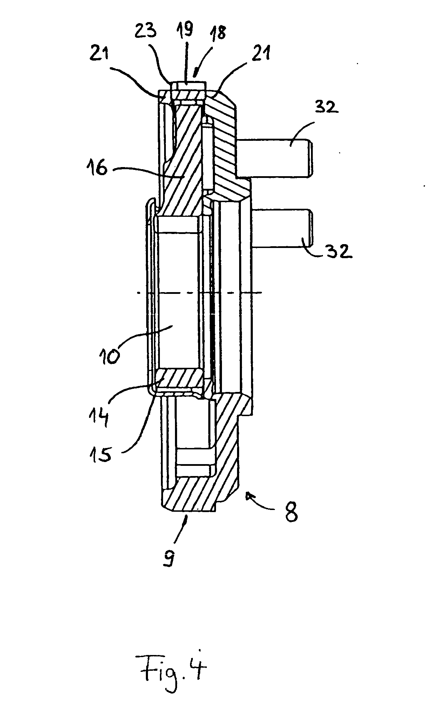

An dem Schwungrad 5 kann ein erstes Kupplungsteil mit einer Innenverzahnung (nicht dargestellt) befestigt sein, in die sich ein zweites Kupplungsteil 8 (vgl. Figuren 2 bis 6) mit einer entsprechend komplementär ausgebildeten Außenverzahnung 9 einsetzen lässt. Das zweite Kupplungsteil 8 ist als außenverzahntes Zahnrad mit einer zentrischen Bohrung 10 ausgebildet. Zwischen der zentrischen Bohrung 10 und der am Umfang des Zahnrads befindlichen Außenverzahnung 9 mit radial nach außen stehenden Zähnen 11 sind mehrere Bohrungen 12 vorgesehen, um das zweite Kupplungsteil mittels Schrauben 32, wie sie in Figur 4 zu erkennen sind, drehfest mit dem Schwingungs- oder Torsionsdämpfer 6 zu verschrauben.

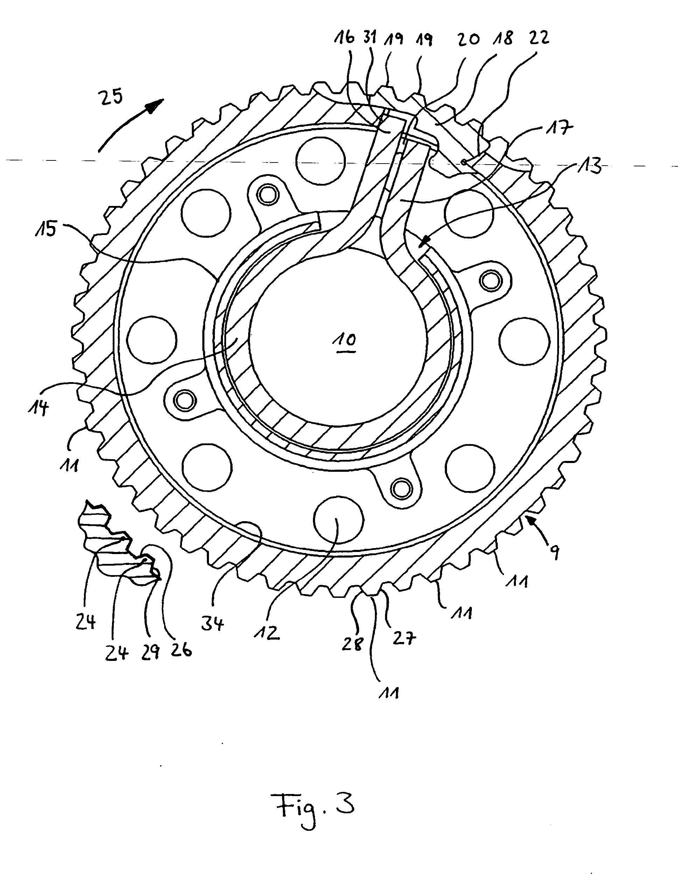

Das zweite Kupplungsteil 8 weist eine Schenkelfeder 13 mit einem Ringteil 14 (siehe insbesondere Figur 3) auf, welcher koaxial zur zentrischen Bohrung 10 angeordnet ist und in einem ringförmigen Gehäuse 15 gehalten wird. Des weiteren weist die Schenkelfeder 13 zwei sich in radialer Richtung erstreckende Schenkel 16, 17 auf. Gegen eine Federkraft der Schenkelfeder 13 lassen sich die Schenkel 16, 17 zusammendrücken, bis sie letztlich zur Anlage kommen.

Die Schenkelfeder 13 stützt sich mit dem Schenkel 16 an einer Schenkelanlagefläche 31 des zweiten Kupplungsteils 11 und somit an der Außenverzahnung 9 ab, während der andere Schenkel 17 gegen ein Segment 18 drückt, das vier Segmentzähne 19 aufweist. Das Segment 18 ist in einer Lücke oder Aussparung 20 der Außenverzahnung 9 angeordnet, wobei diese Lücke 20 keine Zähne aufweist. In axialer Richtung wird die Lücke 20 durch zwei zueinander beabstandete Stege 21 begrenzt, so dass das in der Lücke 34 befindliche Segment 18 axial zur Außenverzahnung 9 fixiert ist. In Umfangsrichtung hingegen lässt sich das Segment 18 bezogen auf die Außenverzahnung 9 ausgehend von einer in den Figuren 2 und 3 gezeigten Stellung des Segments 18 verschieben. In dieser Stellung liegt das Segment 18 mit einer Abstützseite 22 in Umfangsrichtung an der Außenverzahnung 11 an. Aus dieser Stellung heraus erfolgt die Verschiebung des Segments 18 in Umfangsrichtung gegen die Kraft der Schenkelfeder 13.

Das Segment 18 ist nun so beschaffen, dass bei einer Montage der Außenverzahnung 11 in die entsprechende Innenverzahnung des ersten Kupplungsteils die Segmentzähne 19 nur dann mit der Innenverzahnung des ersten Kupplungsteils in Eingriff zu bringen sind, wenn das Segment 18 mit seiner Abstützseite 22 in Umfangsrichtung gesehen von der Außenverzahnung 11 abhebt und gegen die Kraft der Schenkelfeder 13 in Umfangsrichtung verschoben wird. Durch eine Anfasung 23 der Segmentzähne 19 (vgl. Figur 4) lässt sich erreichen, dass beim axialen Aufeinanderschieben von Außenverzahnung 11 und Innenverzahnung der beiden Kupplungsteile das Segment 18 gegen die Federkraft der Schenkelfeder 13 verschoben wird. Da, wie Figur 4 zu entnehmen ist, die Segmentzähne 19 in axialer Richtung gegenüber der Außenverzahnung 9 zurückversetzt sind, lässt sich das zweite Kupplungsteil 8 bereits zu einem kleinen Stück in die Innenverzahnung einsetzen, ohne dass dabei die Schenkelfeder 13 zusammengedrückt wird. Erst dann, d. h. wenn bereits die Außenverzahnung durch die Innenverzahnung geführt ist, werden durch weiteres axiales Verschieben die beiden Kupplungsteile in Umfangsrichtung verspannt. Nach erfolgter Montage drücken die vier Segmentzähne 19 gegen die Zähne der Innenverzahnung, wobei Innenverzahnung und Außenverzahnung in Umfangsrichtung verspannt werden. In Figur 3 sind zwei benachbarte Zähne 24 der Innenverzahnung stellvertretend für die Zähne des ersten Kupplungsteils schematisch dargestellt.

Bei normaler Fahrt des Kraftfahrzeugs wird von dem Verbrennungsmotor 1 über die Kupplungsvorrichtung 7 ein Drehmoment auf das Doppelkupplungsgetriebe 2 übertragen. Bezogen auf die Kupplungsvorrichtung 7 bedeutet dies, dass die Zähne 24 des ersten Kupplungsteils das entsprechende Drehmoment auf die Zähne 11 des zweiten Kupplungsteils 8 übertragen. Die Drehrichtung ist dabei durch den Pfeil mit dem Bezugszeichen 25 (siehe Figur 3) angedeutet. Entsprechend drücken die Zähne 24 mit einer Lastseite 26 gegen eine direkt anliegende Lastseite 27 der Zähne 11.

Durch die Kraft der Schenkelfeder 13 werden über das Segment 18 mit seinen Segmentzähne 19 die Zähne 24 der Innenverzahnung in Umfangsrichtung gegen die Zähne 11 der Außenverzahnung gedrückt, wobei ein Zahn 24 mit seiner Lastseite 26 an der Lastseite 27 des betreffenden Zahns 11 der Außenverzahnung 9 anliegt. Somit wirken das Segment 18 und das Antriebsmoment des Verbrennungsmotors im Normalbetrieb der Kupplungsvorrichtung in die gleiche Drehrichtung, sodass die Schenkelfeder 13 nicht mit dem Antriebs-Drehmoment des Verbrennungsmotors beaufschlagt wird.

Bei einer Lastumkehr, beispielsweise, wenn das Kraftfahrzeug bergab fährt und durch den Motor abgebremst wird, drücken die Zähne 11 mit einer Freilaufseite 28 gegen eine Freilaufseite 29 der Zähne 24 der Innenverzahnung, wobei über das Segment 18 die Schenkelfeder 13 mit dem dann vom Getriebe 2 auf den Motor 1 übertragenen Drehmoment beaufschlagt wird.

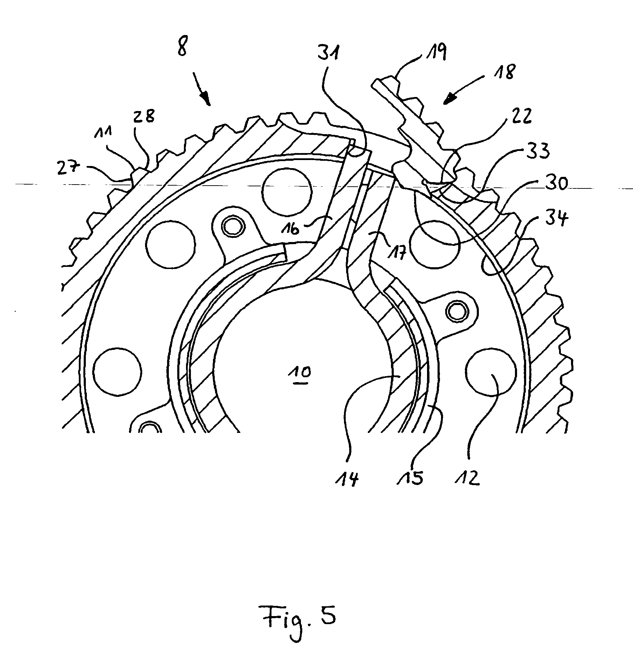

Figur 5 zeigt das Segment 18 in einer Zwischenstellung. Der Schenkel 17 und eine besonders geformte Unterseite 30 können derart zusammenwirken, dass sie eine Rastverbindung bilden, die das Segment 18 in gewünschter Einsatzlage hält, so wie sie beispielsweise in Figur 3 dargestellt ist. Wie den Figur 3 und 5 zu entnehmen ist, lässt sich das Segment 18 um eine Drehachse, die senkrecht zur Zeichenebene der Figur 3 oder 5 verläuft, nur gegen die Kraft der Schenkelfeder 13 herausschwenken. In der in Figur 3 gezeigten Einsatzlage hintergreift in radialer Richtung das Segment 18 mit einer radialen Halteseite 33 (Halteseite 33 in Figur 5 zu erkennen) eine Unterseite 34 der Außenverzahnung 9, so dass das Segment 18 in radialer Richtung gehalten wird.

### Bezugszeichenliste

- 1: Verbrennungsmotor
- 2: Doppelkupplunggetriebe
- 3: Doppelkupplung
- 4: Zahnradsatz
- 5: Schwungrad
- 6: Schwingungs-/Torsionsdämpfer
- 7: Kupplungsvorrichtung
- 8: zweites Kupplungsteil
- 9: Außenverzahnung
- 10: Zentrische Bohrung
- 11: Zahn
- 12: Bohrung
- 13: Schenkelfeder
- 14: Ringteil
- 15: Gehäuse
- 16: Schenkel
- 17: Schenkel
- 18: Segment
- 19: Segmentzahn
- 20: Lücke
- 21: Steg
- 22: Abstützseite
- 23: Anfasung
- 24: Zahn
- 25: Drehrichtung
- 26: Lastseite des Zahns 24
- 27: Lastseite des Zahns 11
- 28: Freilaufseite des Zahns 11
- 29: Freilaufseite des Zahns 24
- 30: Unterseite
- 31: Schenkelanlagefläche
- 32: Schraube
- 33: Halteseite
- 34: Unterseite

## Patentansprüche

1. Kupplungsvorrichtung (7) mit einem ersten Kupplungsteil, das eine Innenverzahnung aufweist, und mit einem zweiten Kupplungsteil (8), das zum ersten Kupplungsteil koaxial angeordnet ist und eine mit der Innenverzahnung des ersten Kupplungsteils zusammenwirkende Außenverzahnung (9) aufweist, wobei die Kupplungsvorrichtung (7) wenigstens eine Federeinrichtung sowie wenigstens ein Segment (18) aufweist, das wenigstens einen nach außen gerichteten Segmentzahn (19) aufweist, der in die Innenverzahnung greift, und wobei sich die Federeinrichtung an dem zweiten Kupplungsteil (8) und an dem Segment (18) abstützt, das bezogen auf die Außenverzahnung (9) in Umfangsrichtung bewegbar ist und sich wiederum an der Innenverzahnung des ersten Kupplungsteils abstützt, wodurch Innenverzahnung und Außenverzahnung in Umfangsrichtung verspannt sind,
**dadurch gekennzeichnet,**
- **dass** sich die Federeinrichtung in Umfangsrichtung an dem zweiten Kupplungsteil (8) einerseits und an dem Segment (18) andererseits abstützt,
- **dass** das Segment (18) in axialer Richtung fixiert gehalten ist,
- und **dass** die Außenverzahnung (9) eine Lücke (20) aufweist, in der das Segment (18) angeordnet ist.

2. Kupplungsvorrichtung (7) nach der Anspruch 1, **dadurch gekennzeichnet, dass** der wenigstens eine Segmentzahn (19) angefast ist.

3. Kupplungsvorrichtung (7) nach einem der Ansprüche 1 bis 2, **dadurch gekennzeichnet, dass** das Segment (18) von außen in die Lücke (20) der Außenverzahnung (9) einsetzbar ist, wobei die Federeinrichtung ein Lösen des Segments (18) erschwert oder verhindert.

4. Kupplungsvorrichtung (7) nach einem der Ansprüche 1 bis 3, **dadurch gekennzeichnet, dass** das Segment (18) um eine Drehachse schwenkbar an der Außenverzahnung (9) aufliegt, wobei in Einsatzlage die Federeinrichtung ein Haltemoment auf das Segment (18) ausübt, wenn dieses aus der Einsatzlage gedreht wird.

5. Kupplungsvorrichtung (7) nach einem der Ansprüche 1 bis 4, **dadurch gekennzeichnet, dass** im Normalbetrieb das erste Kupplungsteil (8) mit der Innenverzahnung in Hauptdrehrichtung ein Drehmoment auf das zweite Kupplungsteil (11) überträgt, wobei die Federeinrichtung die Zähne der Innenverzahnung in Hauptdrehrichtung gegen die Zähne der Außenverzahnung drückt, so dass die Zähne der Innenverzahnung mit einer Lastseite (26) an einer Lastseite (27) der Zähne der Außenverzahnung anliegt.

6. Kupplungsvorrichtung (7) nach einem der Ansprüche 1 bis 5, **dadurch gekennzeichnet, dass** die Federeinrichtung eine Schenkelfeder (13) mit einem Ringteil (14) und zwei Schenkeln (16, 17) aufweist, wobei der Ringteil (14) koaxial oder exzentrisch zu den Kupplungsteilen angeordnet ist und sich die Schenkel (16, 17) in radialer Richtung nach außen erstrecken.

7. Kupplungsvorrichtung (7) nach Anspruch 6, **dadurch gekennzeichnet, dass** der Ringteil (14) einen im Umfangsrichtung nicht geschlossenen Ring mit zwei offenen Enden aufweist, wobei jeweils ein Ende des Ringes (15) mit einem der Schenkel (16,17) verbunden ist.

8. Kupplungsvorrichtung (7) nach Anspruch 7, **dadurch gekennzeichnet, dass** der Ring in einem Winkelbereich größer als 300°, vorzugsweise größer als 320° geschlossen ist und die Schenkel (16, 17) im wesentlichen parallel verlaufen.

9. Kupplungsvorrichtung (7) nach einem der Ansprüche 1 bis 8, **dadurch gekennzeichnet, dass** der wenigstens eine Segmentzahn (13) in axialer Richtung gegenüber der Außenverzahnung (9) zurückversetzt ist.

## Claims

1. Coupling device (7) having a first coupling part which has an internal toothing and having a second coupling part (8) which is arranged coaxially with respect to the first coupling part and which has an external toothing (9) interacting with the internal toothing of the first coupling part, wherein the coupling device (7) has at least one spring device and at least one segment (18) which has at least one outwardly directed segment tooth (19) which engages into the internal toothing, and wherein the spring device is supported on the second coupling part (8) and on the segment (18) which is movable in the circumferential direction relative to the external toothing (9) and which in turn is supported on the internal toothing of the first coupling part, as a result of which the internal toothing and external toothing are braced in the circumferential direction,
**characterized**
- **in that** the spring device is supported in the circumferential direction at one side on the second coupling part (8) and at the other side on the segment (18),
- **in that** the segment (18) is held fixed in the axial direction,
- and **in that** the external toothing (9) has a gap (20) in which the segment (18) is arranged.

2. Coupling device (7) according to Claim 1, **characterized in that** the at least one segment tooth (19) is chamfered.

3. Coupling device according to either of Claims 1 and 2, **characterized in that** the segment (18) can be inserted from the outside into the gap (20) of the external toothing (9), with the spring device hindering or preventing a release of the segment (18).

4. Coupling device (7) according to one of Claims 1 to 3, **characterized in that** the segment (18) rests on the external toothing (9) so as to be pivotable about an axis of rotation, wherein in the inserted position, the spring device exerts a holding moment on the segment (18) when the latter is turned out of the inserted position.

5. Coupling device (7) according to one of Claims 1 to 4, **characterized in that**, in normal operation, the first coupling part (8) with the internal toothing transmits a torque in the main direction of rotation to the second coupling part (11), with the spring device pressing the teeth of the internal toothing in the main direction of rotation against the teeth of the external toothing, such that the teeth of the internal toothing bear with a load side (26) against a load side (27) of the teeth of the external toothing.

6. Coupling device (7) according to one of Claims 1 to 5, **characterized in that** the spring device has a leg spring (13) with a ring part (14) and two legs (16, 17), the ring part (14) being arranged coaxially or eccentrically with respect to the coupling parts, and the legs (16, 17) extending outwards in the radial direction.

7. Coupling device (7) according to Claim 6, **characterized in that** the ring part (14) has a ring which is not closed in the circumferential direction and which has two open ends, wherein in each case one end of the ring (15) is connected to one of the legs (16, 17).

8. Coupling device (7) according to Claim 7, **characterized in that** the ring is closed over an angle range of greater than 300°, preferably of greater than 320°, and the legs (16, 17) run substantially parallel.

9. Coupling device (7) according to one of Claims 1 to 8, **characterized in that** the at least one segment tooth (19) is set back in the axial direction in relation to the external toothing (9).

## Revendications

1. Dispositif d'embrayage (7) comprenant une première partie d'embrayage qui présente une denture interne, et une deuxième partie d'embrayage (8) qui est disposée coaxialement par rapport à la première, et qui présente une denture extérieure (9) coopérant avec la denture intérieure de la première partie d'embrayage, le dispositif d'embrayage (7) présentant au moins un dispositif de ressort et au moins un segment (18), qui présente au moins une dent de segment (19) orientée vers l'extérieur, qui vient en prise dans la denture intérieure, et le dispositif de ressort s'appuyant sur la deuxième partie d'embrayage (8) et sur le segment (18), qui peut être déplacé par rapport à la denture extérieure (9) dans la direction périphérique et qui s'appuie à nouveau sur la denture intérieure de la première partie d'embrayage, de sorte que la denture intérieure et la denture extérieure soient serrées dans la direction périphérique,
**caractérisé en ce que**
- le dispositif de ressort s'appuie dans la direction périphérique d'une part sur la deuxième partie d'embrayage (8) et sur le segment (18) d'autre part,
- le segment (18) est maintenu de manière fixe dans la direction axiale,
- et la denture extérieure (9) présente un vide (20) dans lequel est disposé le segment (18).

2. Dispositif d'embrayage (7) selon la revendication 1, **caractérisé en ce que** l'au moins une dent de segment (19) est biseautée.

3. Dispositif d'embrayage (7) selon l'une quelconque des revendications 1 à 2, **caractérisé en ce que** le segment (18) peut être inséré de l'extérieur dans le vide (20) de la denture extérieure (9), le dispositif de ressort rendant plus difficile ou empêchant un desserrage du segment (18).

4. Dispositif d'embrayage (7) selon l'une quelconque des revendications 1 à 3, **caractérisé en ce que** le segment (18) repose sur la denture extérieure (9) de manière à pouvoir pivoter autour d'un axe de rotation, le dispositif de ressort exerçant, dans la position d'insertion, un couple de retenue sur le segment (18), lorsque celui-ci est tourné hors de la position d'insertion.

5. Dispositif d'embrayage (7) selon l'une quelconque des revendications 1 à 4, **caractérisé en ce que** pendant le fonctionnement normal, la première partie d'embrayage (8) avec la denture intérieure transfère dans la direction de rotation principale un couple à la deuxième partie d'embrayage (11), le dispositif de ressort pressant les dents de la denture intérieure dans la direction de rotation principale contre les dents de la denture extérieure, de sorte que les dents de la denture intérieure s'appliquent avec un côté de charge (26) contre un côté de charge (27) des dents de la denture extérieure.

6. Dispositif d'embrayage (7) selon l'une quelconque des revendications 1 à 5, **caractérisé en ce que** le dispositif de ressort présente un ressort à branche (13) avec une partie annulaire (14) et deux branches (16, 17), la partie annulaire (14) étant disposée coaxialement ou de manière excentrée par rapport aux parties d'embrayage et les branches (16, 17) s'étendant vers l'extérieur dans la direction radiale.

7. Dispositif d'embrayage (7) selon la revendication 6, **caractérisé en ce que** la partie annulaire (14) présente une bague non fermée dans la direction périphérique, avec deux extrémités ouvertes, une extrémité de la bague (15) étant à chaque fois connectée à l'une des branches (16, 17).

8. Dispositif d'embrayage (7) selon la revendication 7, **caractérisé en ce que** la bague est fermée sur une plage angulaire supérieure à 300°, de préférence supérieure à 320°, et les branches (16, 17) s'étendent essentiellement parallèlement.

9. Dispositif d'embrayage (7) selon l'une quelconque des revendications 1 à 8, **caractérisé en ce que** l'au moins une dent de segment (19) est décalée en retrait dans la direction axiale par rapport à la denture extérieure (9).
